# EUROPEAN PATENT APPLICATION

(11) **EP 1 535 801 A1**
(43) Date of publication of application: **01.06.2005**
(21) Application number: 03425758.4
(22) Date of filing: 26.11.2003
(51) Int. Cl.: B60R 9/042

(54) **Overturning slide for loading, transport and unloading from the roof of motor vans orfromany raised position**

(71) Applicant: De Sordi, Fabrizio, 31040 Giavera del Montello (Treviso) (IT)
(72) Inventor: De Sordi, Fabrizio, 31040 Giavera del Montello (Treviso) (IT)

(57) **Abstract**

Overturning slide (1), having a completely usable surface (3) as it is free from devices needed for its operation, for loading, transport and unloading from the roof of motor vans or from any raised positions of specific fittings such as portable ladders, stretchers, rubber dinghies, storage boxes, various tools, etc.

## Description

The object of the description hereto is an overturning slide for loading, transport and unloading from the roof of motor vans or from any raised positions of specific fittings or various materials contained in proper storage boxes.

A typical instance of use of this kind of fittings is the loading, transport and unloading of portable ladders.

At the existing state of technique similar back overturning systems like the object hereto are to be found, as well as are lateral overturning systems.

The object hereto differs from the above mentioned systems because of the following features:
- The movement is constantly controlled, with no human support needed to control the descent
- The stop at the end of the travel takes place without abrupt stress for the structure
- The upper surface of the slide is let completely free, therefore the system offers a wide range of applications
- The position of the gas springs and the connection system make it extremely compact, and this is specially convenient for high-roof vehicles
- The position of the fulcra in working position provides for a further descent of the system thanks to the compression of the gas springs
- in working unloaded position no reactions of opposite sense have to be manually controlled

The object hereto is made up of the following elements, which are marked in all figures with the same reference number given below:
1. main frame, which is fitted to the roof of the motor van or to the raised structure
2. open seat supporting the sliding overturning slide
3. sliding overturning slide on which the load, the ladder, the storage box or other specific objects are secured
4. reaction arm
5. gas springs
6. compensator cylinder
7. handling bar, which may be fixed or removable
8. self-locking fastener
9. safety auxiliary fastener

### A Loading supports

The loading supports vary according to the specific use of the slide, e.g. loading of the ladder, of the storage box or other specific components.
The object hereto is depicted in the following figures respectively:
Fig 1 - side view in resting position
Fig 2 - plan view in resting position
Fig 3 - front view in resting position
Fig 4 - side view in working position
Fig 5 - detail in resting position
Fig 6 - detail in working position
Fig 7 - transversal cross-section

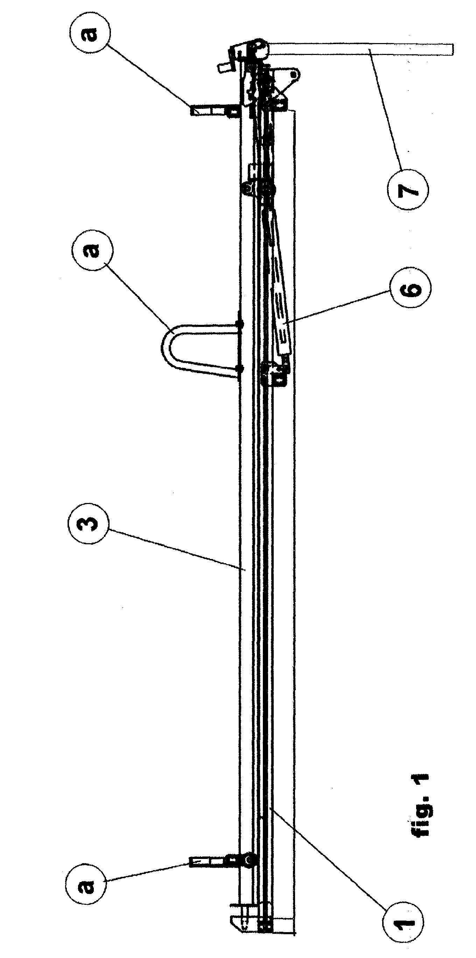

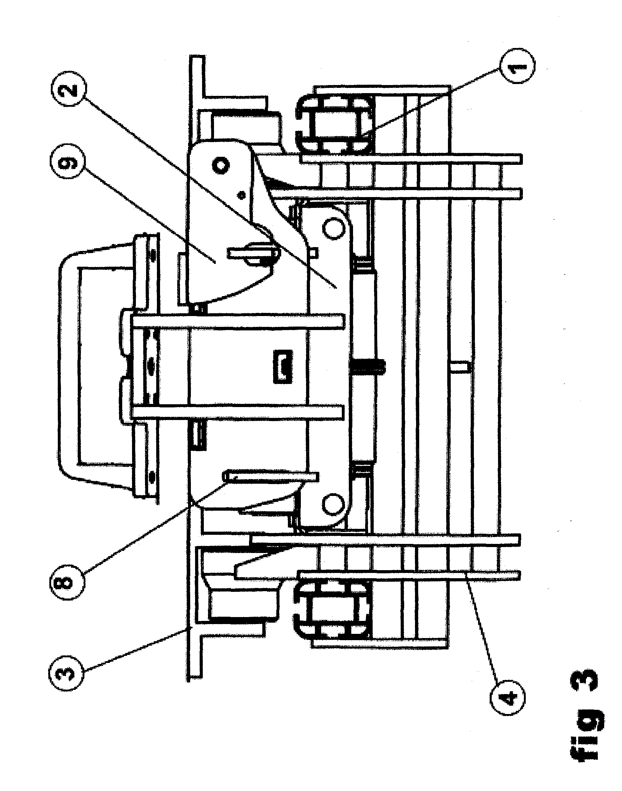

For the functioning the operator shall take the handling bar, fig 1 - fig 4 - fig 5 (7), and by means of the latter, either in the mobile or in the fixed bar version, release the safety auxiliary fastener, fig 3 (9), as well as the self-locking fastener fig 3 - fig 5 (8).

Once both fasteners are released the sliding slide glides automatically a few cm through the effect of the bumper spring; at this stage the operator, holding the handling bar, makes the slide glide outwards over the open seat hinged to the main frame.

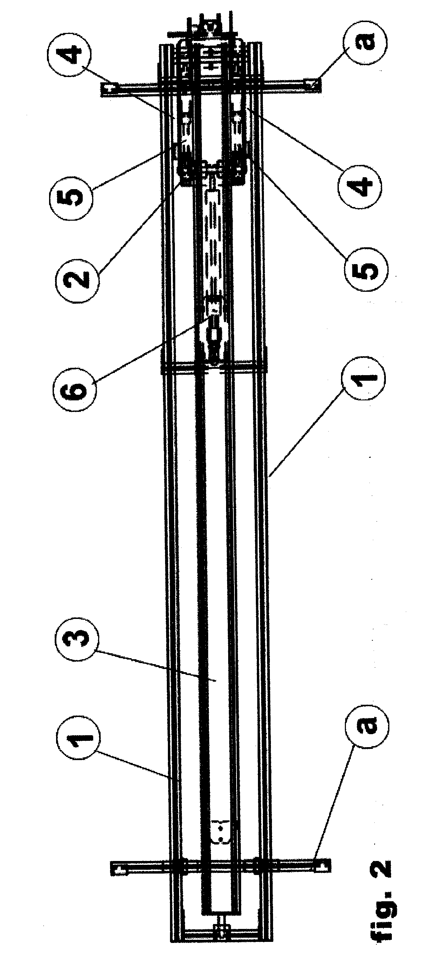

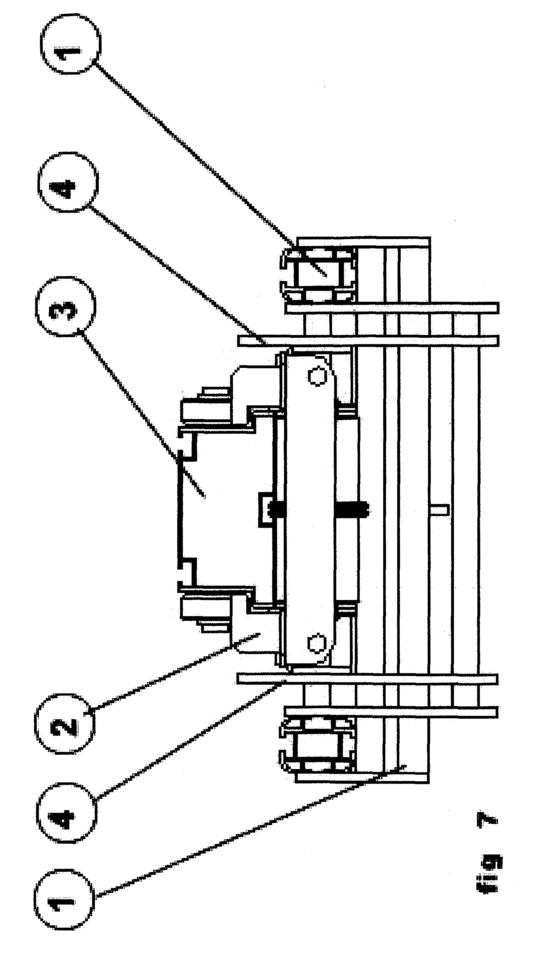

The sliding of the slide fig 1 - fig 2 - fig 3- fig 4 - fig 5 - fig 6 (3) in relation to the main frame, fig 2 - fig 3 - fig 4 - fig 5 - fig 6 (1), takes place over an open seat, fig 2 - fig 3 - fig 4 - fig 5 - fig 6 - fig 7 (2) by means of rollers and/or runners and/or other sliding support devices which may vary according to the destination and/or the load.

Thanks to the open status of the seat, the upper surface of the slide is let completely free and allows the fastening of any kind of support needed to transport the load, in every position of the slide itself and/or any particular fittings.

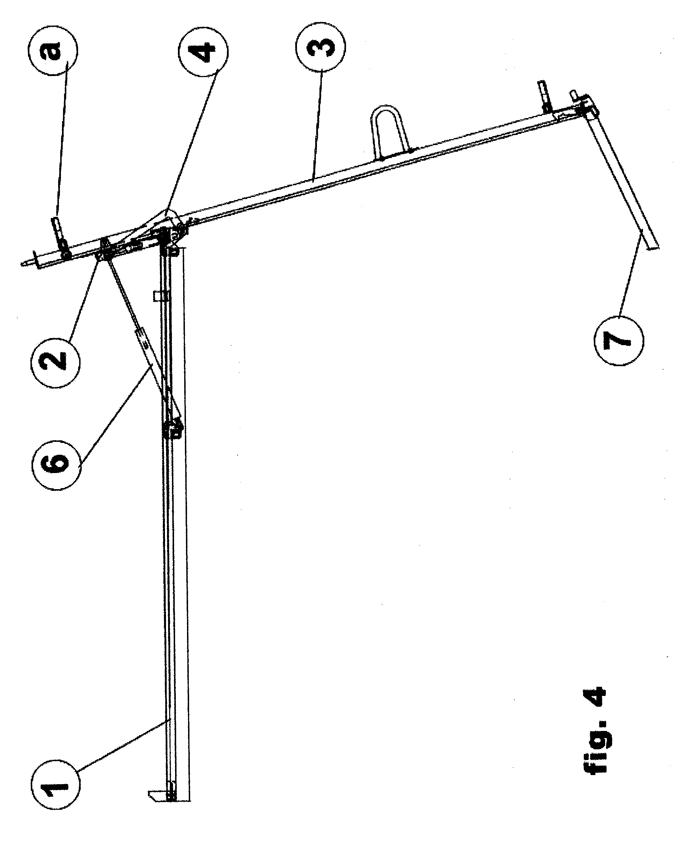

The slide, through the effect of the load and of the gas springs, fig 2 - fig 5 - fig 6 (5), bends over until it reaches the semi-vertical position of fig 4

The gas springs operate as braking agent in the downwards rotation of the slide and as supporting element while the slide is moving upwards.

The action of the gas springs, fig 2 - fig 5 - fig 6 (5), is obtained by means of a reaction arm, fig 2 - fig 4 - fig 6 - fig 7 (4) which provides for a further downwards movement of the slide itself.

Therefore the loading and unloading of the ladder, of the fittings or of the material positioned in the slide is made easier.

The use of a reaction arm enables furthermore the positioning of the gas springs under the slide, so that they are sheltered against atmospheric agents and possible incidental strokes during loading and unloading of the material to be transported.

The movement is controlled by the compensator cylinder, fig 1 - fig 2 - fig 4 - fig 5 - fig 6 (6), which adjusts the overturning of the slide and regulates the movement thereof until the arrest on the stops in the event that the operator interrupts the action.

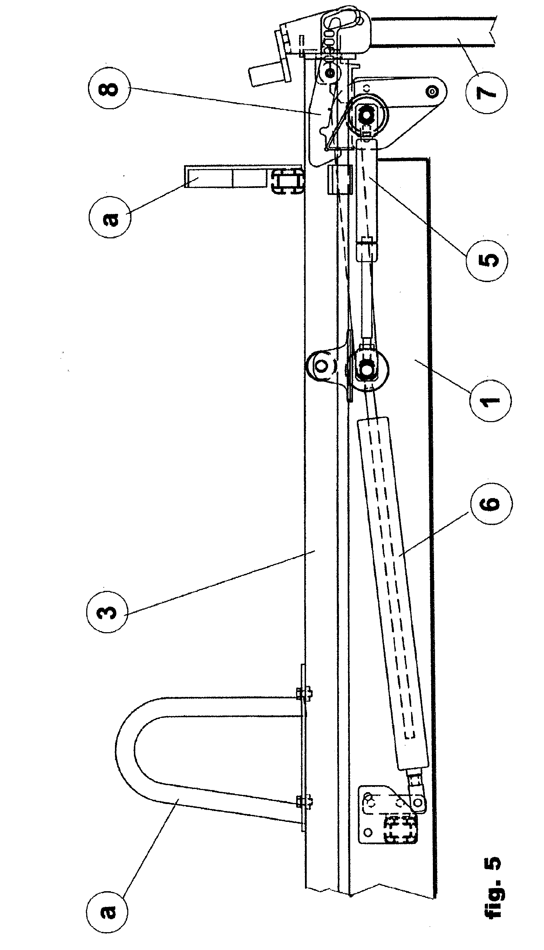

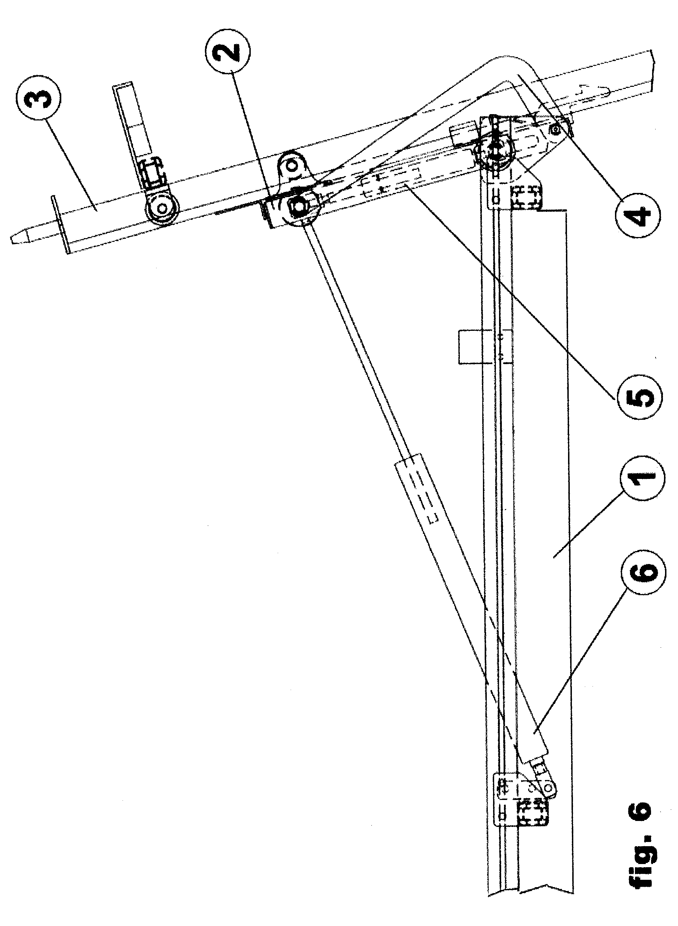

Figures 5 and 6 show in detail the components of the system in their resting and working positions respectively.

The load is fixed to the slide by specific supports to which it is fastened, when needed, by means of automatic devices or simple bindings.

The upper surface of the slide, completely free from components needed for the operation, allows a wide range of applications even if not mentioned in the description hereto.

The re-positioning takes place easily lifting the slide by holding the central handle and then pushing it through the handling bar.

Thanks to the dynamic effect of the gas springs, fig 2 - fig 5 - fig 6 (5), and the compensator, fig 1 - fig 2 - fig 4 - fig 5 - fig 6 (6), the power needed for this operation is minimum.

The object hereto, without prejudice to the principle of functioning, may be manufactured in versions which differ for the different destination and/or loading capacity; to this benefit the structure, the sectors, the anchors, the springs, the compensator cylinder and all components are dimensioned.

If compared to similar solutions that are presently merchandized the object hereto provides the following advantages:
- the upper surface of the slide is completely free and serviceable
- the gas springs are sheltered
- the further descent of the slide once the overturning process is completed through the effect of the compression of the gas springs
- the automatic and constant control in the overturning phase
- the arrest without violent strokes against the stops

## Claims

1. Overturning slide, having a completely usable surface as it is free from devices needed for its operation, for loading, transport and unloading from the roof of motor vans or from any raised positions of specific fittings such as portable ladders, stretchers, rubber dinghies or alike, as described hereto.

2. Overturning slide, having a completely usable surface as it is free from devices needed for its operation, for loading, transport and unloading from the roof of motor vans or from any raised positions of any kind of storage boxes as described hereto.

3. Integrated system made up of reaction arm, gas springs and compensator cylinder for the overturning of a mobile structure at controlled speed and arrest preventing violent strokes on the stops.

4. Overturning slide, having a completely usable surface as it is free from devices needed for its operation, for loading, transport and unloading from the roof of motor vans or from any raised positions of portable ladders, stretchers, rubber dinghies or alike, as described hereto, but provided with a different number of gas springs.

5. Overturning slide, having a completely usable surface as it is free from devices needed for its operation, for loading, transport and unloading from the roof of motor vans or from any raised positions of portable ladders, stretchers, rubber dinghies or alike, as described hereto, but provided with a different number of compensator cylinders.

6. Overturning slide, having a completely usable surface as it is free from devices needed for its operation, for loading, transport and unloading from the roof of motor vans or from any raised positions of any kind of storage boxes as described hereto, but provided with a different number of gas springs.

7. Overturning slide, having a completely usable surface as it is free from devices needed for its operation, for loading, transport and unloading from the roof of motor vans or from any raised positions of any kind of storage boxes as described hereto, but provided with a different number of compensator cylinders.

8. Positioning of the gas springs inside the open seat so that, carrying out their action in linear position to the slide, they cause its further movement downwards through the effect of their own compression.

9. Overturning slide as described in the above items limited to loading and unloading only, and not aimed to the transport, fixed installations.
